Europäisches Patentamt

European Patent Office

Office européen des brevets

(11) Veröffentlichungsnummer: **0 180 770**
**B1**

(12) EUROPÄISCHE PATENTSCHRIFT

(45) Veröffentlichungstag der Patentschrift: **23.05.90**

(51) Int. Cl.⁵: **C 10 G 1/06**

(21) Anmeldenummer: **85112514.6**

(22) Anmeldetag: **03.10.85**

(54) Verfahren für Mehrphasen-Reaktoren mit exothermer Wärmetönung, speziell für Hydrierreaktoren in der Sumpfphase.

(30) Priorität: **20.10.84 DE 3438606**

(43) Veröffentlichungstag der Anmeldung:
**14.05.86 Patentblatt 86/20**

(45) Bekanntmachung des Hinweises auf die
Patenterteilung:
**23.05.90 Patentblatt 90/21**

(84) Benannte Vertragsstaaten:
**DE FR GB**

(56) Entgegenhaltungen:
**DE-A-2 830 824**

(73) Patentinhaber: **Ruhrkohle Aktiengesellschaft**
**Rellinghauser Strasse 1**
**D-4300 Essen 1 (DE)**

(72) Erfinder: **Wolowski, Eckard, Dr.**
**Kettwiger Strasse 11**
**D-4330 Mülheim-Ruhr (DE)**
Erfinder: **Mirtsch, Frank, Dr.**
**Prosper Strasse 101**
**D-4250 Bottrop (DE)**
Erfinder: **Dybus, Herbert, Dipl.-Ing.**
**Augener Strasse 92**
**D-4300 Essen (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Beschreibung

Die Erfindung betrifft Mehrphasen-Reaktoren mit exothermer Wärmetönung, bei welchen ein annähernd isothermes Temperaturprofil erreicht und die Abwärme wirtschaftlich genutzt wird.

Konventionelle Hydrierreaktoren in der Sumpfphase, welche bei erhöhten Temperaturen und Drücken betrieben werden, besitzen in den meisten Fällen eine keramische Ausmauerung, um aus Festigkeitsgründen den drucktragenden Stahlmantel auf niedriger Temperatur zu halten. Infolge des sich in der Reaktorwand einstellenden Temperaturgefälles fließt Wärme vom Reaktorinhalt an die Umgebung ab. Diese Abwärme ist Verlustwärme. Die Wärmetönung der Reaktorprodukte - beispielsweise bei der Kohlehydrierung- ist jedoch bedeutend größer als die durch die Reaktorwände abfließende Verlustwärme, so daß zur Einstellung eines nahezu isothermen Temperaturprofils des Reaktorinhaltes zusätzlich Kaltgas an verschiedenen Stellen in den Reaktor eingeleitet wird, um die überschüssige Reaktionswärme abzuführen.

In Sumpfphasereaktoren - z.B. bei der Kohlehydrierung - ist die abzuführende Reaktionswärme entlang der Reaktionsstrecke sehr unterschiedlich. Nach Eintritt der Reaktionspartner in den Reaktor wird die Reaktionswärme zunächst zum Aufheizen der Reaktionspartner benötigt. Um ein Überschreiten der optimalen Reaktionstemperatur in der anschließenden Reaktionsstrecke zu vermeiden, muß die überschüssige Reaktionswärme abgeführt werden. Diese Reaktionswärme nimmt mit zunehmender Reaktionsstrecke infolge abgebauter Reaktionsprodukte allmählich ab. Hierdurch ergeben sich unterschiedliche Kaltgaseinspeisungen entlang der Reaktionsstrecke.

Trotz gezielter, örtlicher Kaltgaseinspeisungen entlang der Reaktionsstrecke ist es jedoch nicht möglich, ein gewünschtes isothermes Temperaturprofil des Reaktorinhalts zu erreichen; denn aus Versuchsergebnissen in Hydrierreaktoren in der Sumpfphase ist bekannt, daß das Einströmen von Kaltgas örtliche unterkühlte Zonen erzeugt. Durch Unterschreiten der optimalen Reaktionstemperatur nimmt der chemische Umsatz in diesen Zonen deutlich ab. Weiterhin wird das zugeführte Kaltgas - ein wasserstoffreiches Reaktionsgas im Fall der Hydrierung von Kohlen, Teeren, Schwerölen usw. - bei tiefer Temperatur weniger von der reaktiven Flüssig/Festphase absorbiert, welches die chemische Reaktion in der Sumpfphase negativ beeinflußt.

Auch hat ein entlang der Reaktionsstrecke eingeschleustes Kaltgas den Nachteil, daß es als Reaktionsgas mit verminderter Verweilzeit nur teilweise für den chemischen Umsatz genutzt wird. Hierdurch wird insgesamt ein größerer Gaskreislauf mit erhöhtem Kompressionsaufwand erforderlich.

Infolge der Blasensäulenströmung wird durch die erhöhte Gasgeschwindigkeit der Füllgrad der Flüssig/Fest-Phase in den hinteren Reaktoren reduziert und die chemische Produktbildung verringert.

Die bisher üblichen vergleichseise großen Kaltgasmengen verschlechtern auch erheblich den thermischen Wirkungsgrad des Gesamtprozesses, da die Exergieverluste groß sind, wenn Kaltgas zwecks Abfuhr der chemischen Reaktionswärme verwendet wird.

Es ist bekannt, die Reaktionswärme in einem Reaktor mit "schwimmender Blase" über die Reaktorwand abzuführen, wobei die Reaktionswärme wirtschaftlich zur Aufheizung der Einsatzstoffe im Mantelraum des Reaktors genutzt wird und auf die o.g. Kaltgaseinspeisung verzichtet wird (DDR-Patentschrift Nr. 54994).

Hierbei wird an der Druckseite des Gasumlaufverdichters eine Menge Kaltgas als Teilstrom aus dem Gaskreislauf entnommen und über ein Regelorgan in den Ringraum des Reaktors geleitet. Beim Durchströmen des Ringraumes erhitzt sich dieser gasförmige Teilstrom auf nahezu Reaktionstemperatur und sorgt gleichzeitig für den erforderlichen Druckausgleich.

Das letztgenannte Verfahren ist im Hinblick auf Hochdruckreaktoren mit einem Gemisch aus gasförmigen, flüssigen und festen Reaktionspartnern nicht anwendbar, da hierbei zwischen Ringraum und Innenraum eine direkte Verbindung besteht, durch welche - z.B. bei Druckschwankungen infolge Betriebsstörungen - feststoffhaltige -Reaktionsprodukte in den Ringraum gelangen und letzteren teilweise oder vollständig verstopfen können (Verkokung bei Hydrierungen in der Sumpfphase). Eine gleichmäßige Kühlung des äußeren, drucktragenden Reaktormantels wäre dann nicht mehr gewährleistet.

Bei dem o.g. Verfahren ist zu berücksichtigen, daß der aus dem Gaskreislauf abgezogene Teilstrom über ein Regelorgan dem Ringraum des Reaktors zugeführt werden muß. Dieses Regelorgan kann jedoch eine Störquelle für den gesamten prozeß darstellen.

Deshalb wurde in einem weiteren Vorschlag das Reaktorprinzip "schwimmende Blase" den Erfordernissen der dreiphasigen Sumpfphasehydrierung angepaßt. (DE 3323885 A 1) Es ist jedoch auch hier nicht möglich, ein isothermes Temperaturprofil im Reaktor einzustellen, da die o.g. unterschiedliche Reaktionswärme entlang der Reaktionsstrecke nicht über die Reaktorwand gezielt abgeführt werden kann. Auch bei dem o.g. DDR-Verfahren kann die Reaktionswärme nicht gezielt abgeführt werden, um ein isothermes Temperaturprofil im Reaktor einzustellen.

Die in der Technik sonst übliche Methode, mittels Rührer oder Einbauten im Reaktionsraum ein isothermes Temperaturprofil zu erzeugen, ist im Fall der dreiphasigen Sumpfphasehydrierung wegen Gefahr von Feststoffanlagerungen an den Einbauten nicht anwendbar.

Es ist in der Technik bekannt, das Prinzip des Schlaufenreaktors zu verwenden, um ein isothermes Temperaturprofil im Reaktor zu erzeugen.

Hierbei wird mittels eines senkrecht im Reaktor angeordneten Leitrohres eine intensive Rückvermischung der Reaktionsprodukte erreicht, welche eine Temperaturangleichung bewirkt. Zwecks Abfuhr der Reaktionswärme kann das Leitrohr als Kühlmantel im Reaktorinnern ausgebildet werden. (DE-PS 859 444). Bei der Kohlehydrierung ist jedoch ein strömungsphysikalisch vollständiger Rücklauf - speziell der spezifisch schwereren Reaktionspartner - nicht erwünscht. Eine Rückführung der schwer oder nicht abbaubaren Produkte (Asphalte und Preasphalte) in einem Schlaufenreaktor hat eine ähnliche negative Auswirkung auf die chemische Reaktion wie die bereits bekannte äußere Rückführung des asphaltreichen Abschlamms vom Austritt des letzten Reaktors vor den Eintritt des 1. Reaktors. Auch in einem weiteren Verfahren mit Schlaufenreaktor und teilweise äußerer Produktrückrückführung werden die schwersiedenden Produkte (Asphalte und Preasphalte) rezirkuliert (DE-PS 926 846). Die beiden letztgenannten Verfahren haben darüberhinaus hinsichtlich Kohlehydrierung den Nachteil, daß Einbauten im Reaktor (z.B. senkrechtes Leitrohr und innenliegendes Kühlsystem) speziell an strömungsphysikalischen Umlenkungen - häufig zu Ablagerungen und Verkokungen führen.

Der Erfindung liegt die Aufgabe zugrunde, für Reaktoren mit mehrphasigen Einsatzstoffen und exothermer Reaktionswärme - speziell für thermisch und druckbelastete Reaktoren der Sumpfphasehydrierung - ein nahezu isothermes Temperaturprofil des Reaktorinhaltes zu erzeugen sowie die abgeführte Reaktionswärme größtenteils wirtschaftlich zu nutzen.

Diese Aufgabe wird erfindungsgemäß dadurch gelöst, daß zur Einstellung e nahezu isothermen Temperaturprofils im Innenbehälter und zur verbesserten Nutzung der chemischen Reaktionswärme die im ersten Reaktor gebildete Reaktionswärme zur adiabaten Aufheizung der Reaktoreinsatzstoffe verwendet wird, die restliche Reaktionswärme des ersten Reaktors und die Reaktionswärme des zweiten und der folgenden Reaktoren durch indirekten Wärmeaustausch zur Aufheizung derjenigen Einsatzstoffe verwendet werden, welche sich im Ringraum der nachfolgenden Reaktoren befinden, wobei zuerst der zweite Reaktor und dann die folgenden Reaktoren und zuletzt im oberen Teil des ersten Reaktors, welcher auf der Innenseite des Mantelraumes im unteren Abschnitt seiner Länge mit einer Wärmeisolierschicht ausgestattet ist, eine Aufheizung stattfindet und wobei durch eine äußere Wärmeisolierung aller Reaktoren die Abstrahlverluste der chemischen Reaktionswärme begrenzt werden und 15 bis 25% der auf der Reaktionsstrecke freiwerdenden Reaktionswärme durch Kaltgaseinspeisung in den Innenbehälter abgeführt wird.

Die Wärmeabfuhr durch die Reaktorwand wird mit Hilfe des Reaktorprinzips "schwwimmende Blase" realisiert. Hierbei durchströmen feststofffreie Reaktoreinsatzstoffe im Fall der Kohlehydrierung z.B. das Hydriergas - den Mantelraum des Reaktors und werden durch den Wärmefluß durch die innere Reaktorwand aufgeheizt. Zur Realisierung der o.g. unterschiedlichen Wärmeabfuhr entlang der Reaktionsstrecke (meist mehrere Reaktoren in Reihe) werden die Mantelräume der Reaktoren in der Weise vom Hydriergas durchströmt, daß die Größe der treibenden Temperaturdifferenzen zwischen dem Reaktorinhalt und dem Hydriergas der jeweils abzuführenden Reaktionswärme entspricht. Weiterhin kann der Strömungsquerschnitt für das Hydriergas im Mantelraum durch Einsetzen eines Trennbleches oder Anbringen einer Isolierschicht (auf der Mantelseite) reduziert werden, um den Wärmeübergang zu vergrößern.

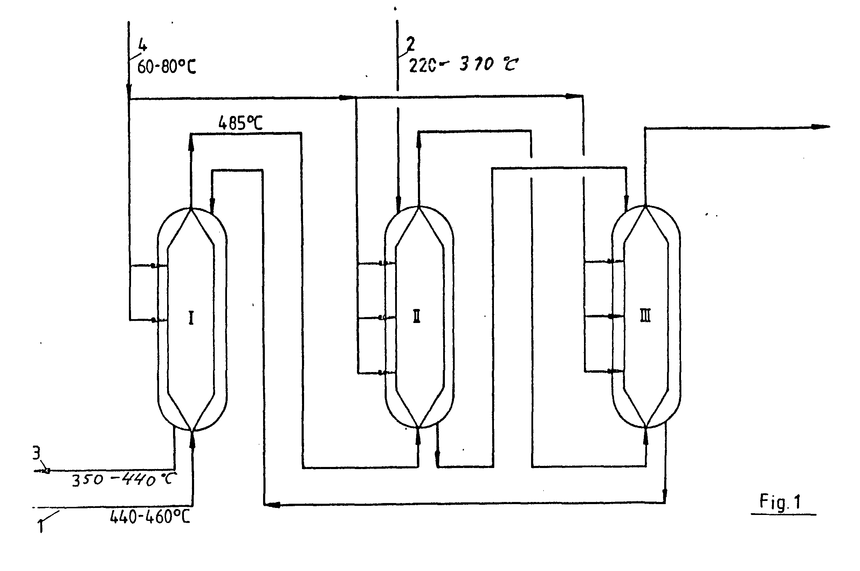

Das Verfahren wird in Fig. 1 schematisch dargestellt. Es folgt ein Anwendungsbeispiel aus der Kohlehydrierung:

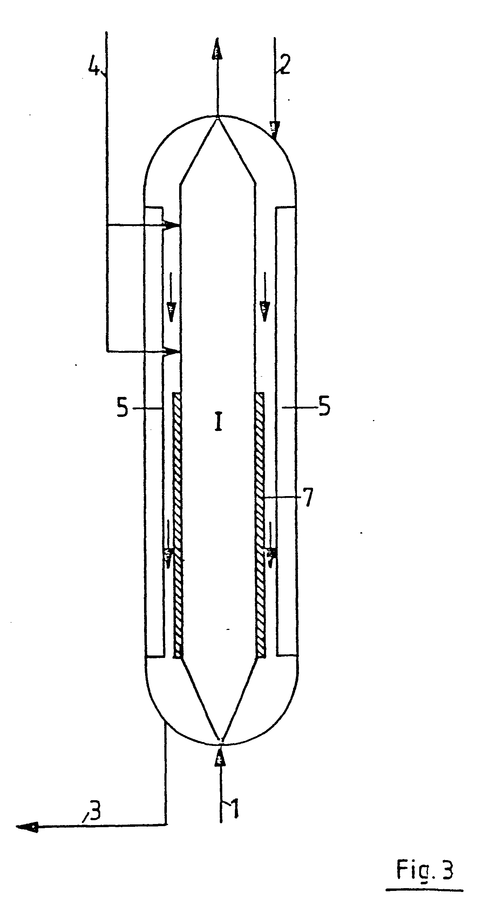

Das in der Vorwärmung auf eine Temperatur von 460°C aufgeheizte Reaktionsgemisch, bestehend aus 10 t/h Kohle, 0,5 t/h Katalysator, 15 t/h Lösungsmittel und 9,5 t/h Hydriergas, durchströmt 3 in Reihe geschaltete Reaktoren jeweils von unten nach oben. Das Reaktionsgemisch wird durch die im unteren Teil des 1. Reaktors gebildeten chemischen Reaktionswärme Q = 858 KW von 460°C auf 485°C erhitzt. Infolge der Isolation 7 in Fig 3 fließt im unteren Teil des 1. Reaktors nahezu keine Wärme durch die Reaktorinnenwand ab.

Von der in der folgenden Reaktionsstrecke (oberer Teil des 1. Reaktors, 2. und 3. Reaktor) gebildeten chemischen Reaktionswärme Q= 2935 ttels indirektem Wärmeaustausch zur Aufheizung von 9,5 t/h Hydriergas (2,3 in Fig.1) von 220°C auf 350°C verwendet; nur eine Vergleichsweise geringe Reaktionswärme von 580 KW wird zur örtlichen Temperaturfeinregelung des Reaktorinhalts mittels 0,75 t/h Kaltgas (4 in Fig. 1) welches von 60°C auf 485°C aufgeheizt wird, abgeführt; 290 KW fließen als Verlustwärme durch die Wände ab. Auf diese Weise wird der größte Teil der chemischen Reaktions wärme benutzt, um Hydriergas auf vergleichsweise hohe Temperatur vorzuwärmen.

Durch diese Hydriergasvorwärmung kann das dem 1. Reaktor vorgeschaltete Aufheizsystem bestehend aus Wärmeaustauschern und Aufheizöfen wesentlich entlastet werden.

Unter Berücksichtigung der Aufheizung der Reaktionsprodukte im unteren Teil des 1. Reaktors von 460°C auf 485°C ergeben sich folgende Stromführungen und Temperaturen für das vorzuwärmende Hydriergas:

Der Hydriergasstrom wird zunächst im 2. Reaktor von 220°C auf 282°C, dann im 3. Reaktor von 282°C auf 329°C und schließlich im oberen Teil des 1. Reaktors von 329°C auf 350°C erhitzt. Dabei strömt das Hydriergas im Gegenstrom zu den Reaktionsprodukten im Reaktor. Hierdurch stellen sich treibende Temperaturdifferenzen für die Wärmeübertragung zwischen Reaktorinhalt und aufzuwärmendem Hydriergas ein, welche, tendenziell den aus den einzelnen Reaktoren abzuführenden Reaktionswärmen entsprechen.

Zur Temperaturfeineinstellung in den Reaktoren werden je Reaktor nur ca. 0,25 t/h Kaltgaseinspeisung verwendet. Hierdurch werden die unterkühlten Zonen minimiert.

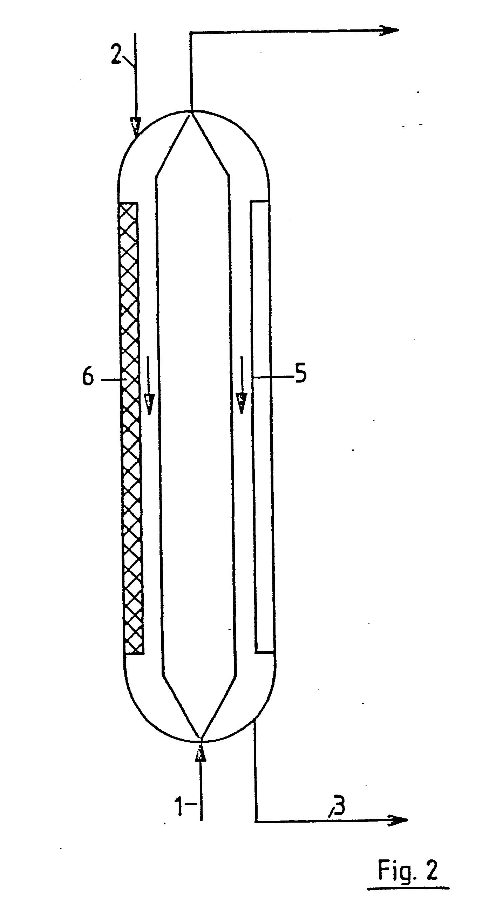

In Fig. 2 ist die Aufteilung des Mantelraumes in einen verengten Strömungskanal für das Hydriergas einerseits und in einen äußeren Isolierraum anderseits dargestellt. Der Isolierraum kann entweder durch ein Trennblech 5 oder mittels Isolierstoff 6 realisiert werden. Der Isolierraum befindet sich auf der Außenseite des Mantelraumes, damit eine Aufheizung großer Hydriergasmengen auf hohem Temperaturniveau erfolgt. Wird der Wärmeübergangskoeffizient im Ringspalt zu groß, wird zusätzlich auf der Innenseite des Ringspaltes eine vergleichsweise dünne Isolierschicht - z.B. eine 1 mm starke Asbestschicht - angebracht. Die äußere Isolierschicht verhindert im Störfall (z.B. Ausfall des Hydriergaskompressors), daß sich der drucktragende Stahlmantel rasch auf unzulässige Temperaturen aufheizt, bevor durch Ausschleusen und Druckentlastung des Reaktorinhaltes der Druckbehälter entlastet wird.

Im Reaktor I muß im oberen Teil vergleichsweise viel Reaktionswärme abgeführt werden, während im unteren Teil des Reaktors I möglichst wenig gekühlt werden soll. Hierzu kann die in Fig. 3 dargestellte Ausführung des Mantelraumes verwendet werden. Im oberen Teil des Reaktor I wird der Strömungskanal im Mantelraum mittels Trennblech 5 verengt, um durch erhöhte Strömungsgeschwindigkeit den Wärmeübergang zu verbessern. Im unteren Teil des Reaktor I wird mittels innenliegender Isolierschicht 7 die Wärmeabfuhr stark reduziert.

## Patentansprüche

1. Verfahren zur Sumpfphasenhydrierung, insbesondere zur Hydrierung von Kohlen, Schwerölen oder Teeren mit dreiphasigen Reaktionsprodukten und exothermer chemischer Reaktion in mehreren in Reihe geschalteten Reaktoren, von denen jeder eine schwimmende Blase besitzt und das im Mantelraum der Reaktoren geführte Reaktionsgas zwecks Wärmerückgewinnung aufgeheizt und dann den mehrphasigen Reaktoreinsatzstoffen zugeführt wird, dadurch gekennzeichnet, daß zur Einstellung eines nahezu isothermen Temperaturprofils im Innenbehälter und zur verbesserten Nutzung der chemischen Reaktionswärme die im ersten Reaktor gebildete Reaktionswärme zur adiabaten Aufheizung der Reaktoreinsatzstoffe verwendet wird, die restliche Reaktionswärme des ersten Reaktors und die Reaktionswärme des zweiten und der folgenden Reaktoren durch indirekten Wärmeaustausch zur Aufheizung derjenigen Einsatzstoffe verwendet werden, welche sich im Ringraum der nachfolgenden Reaktoren befinden, wobei zuerst der zweite Reaktor und dann die folgenden Reaktoren und zuletzt im oberen Teil des ersten Reaktors, welcher auf der Innenseite des Mantelraumes im unteren Abschnitt seiner Länge mit einer Wärmeisolierschicht ausgestattet ist, eine Aufheizung stattfindet und wobei durch eine äußere Wärmeisolierung aller Reaktoren die Abstrahlverluste der chemischen Reaktionswärme begrenzt werden und 15 bis 25% der auf der Reaktionsstrecke freiwerdenden Reaktionswärme durch Kaltgaseinspeisung in den Innenbehälter abgeführt wird.

2. Werfahren nach Anspruch 1, dadurch gekennzeichnet, daß für die äußere Isolierschicht der Reaktoren und für die innere Isolierschicht des ersten Reaktors ein Wärmedämmstoff verwendet wird.

3. Verfahren nach Anspruch 1, dadurch gekennzeichnet, daß für die äußere Isolierschicht der Reaktoren und für die innere Isolierschicht des ersten Reaktors ein ringförmiger Hohlraum verwendet wird.

## Revendications

1. Procédé d'hydrogénation en phase liquide, en particulier pour l'hydrogénation de charbons, d'huiles lourdes ou de goudrons avec des produits réactionnels en trois phases et une réaction chimique exothermique dans plusieurs réacteurs disposés en série, dont chacun possède une bulle flottante et où le gaz réactionnel qui circule dans l'espace annulaire des réacteurs est chauffé afin de récupérer de la chaleur puis est introduit dans les matériaux en plusieurs phases constituant la charge des réacteurs, caractérisé en ce que pour établir un profil de température presque isotherme dans le récipient intérieur et pour mieux utiliser la chaleur de la réaction chimique, on utilise la chaleur de réaction dégagée dans le premier réacteur pour chauffer de manière adiabatique les matériaux constituant la charge du réacteur, en ce qu'on utilise par échange de chaleur indirect le reste de la chaleur de réaction dégagée dans le premier réacteur et la chaleur de réaction dégagée dans le second réacteur et dans les réacteurs suivants afin de chauffer ces matériaux de la charge qui se trouvent dans la chambre annulaire des réacteurs suivants, un chauffage se produisant tout d'abord dans le second réacteur puis dans les réacteurs suivants et enfin dans la partie supérieure du premier réacteur, lequel est équipé d'une couche thermiquement isolante sur la face intérieure de l'espace annulaire dans la partie inférieure de sa longueur, les pertes par rayonnement de la chaleur de la réaction chimique étant limitées par une isolation thermique extérieure de tous les réacteurs, et une fraction comprise entre 15 et 25% de la chaleur de réaction libérée sur le trajet de la réaction étant éliminée par injection de gaz froid dans les récipients intérieurs.

2. Procédé selon la revendication 1, caractérisé en ce que, pour la couche isolante extérieure des réacteurs et pour la couche isolante intérieure du premier réacteur, on utilise un matériau calorifuge.

3. Procédé selon la revendication 1, caractérisé en ce que, pour la couche isolante extérieure des réacteurs et pour la couche isolante intérieure du premier réacteur, on utilise un espace vide de forme annulaire.

## Claims

1. Method for liquid phase hydrogenation, especially for hydrogenation of coals, heavy oils or tars with three-phase reaction products and exothermic chemical reaction in several reactors connected in series, each of which possesses a floating bladder and in which the reaction gas passing through the wall space of the reactors is heated for the purpose of heat recuperation and is than fed to the multiphase reactor charge materials, characterized in that, for establishing a virtually iso-thermic temperature profile in the inner vessel and for improving the utilization of the chemical heat of reaction, the heat of reaction formed in the first reactor is used for the adiabatic heating of the reactor charge materials, the remaining reaction heat from the first reactor and the reaction heat from the second and succeeding reactors is used by indirect heat exchange for heating those charge materials that are situated in the annular space of the succeeding reactors, wherein first the second reactor and then the succeeding reactors and, lastly, in the upper part of the first reactor which is equipped with a thermally insulating layer on the inner face of the wall space in the lower part of its length, a heating takes place, and wherein the radiation loses of the chemical heat of reaction are limited by an external thermal insulation of all the reactors, and 15 to 25% of the heat of reaction released on the reaction range is removed into the inner vessel by cold gas infeed.

2. Method according to Claim 1, characterized in that a thermally insulating material is used for the outer insulating layer of the reactors and for the inner insulating layer of the first reactor.

3. Method according to Claim 1, characterized in that an annular space is used for the outer insulating layer of the reactors and for the inner insulating layer of the first reactor.

4
60-80°C

2
220 - 370 °C

485°C

I

II

III

3
350 - 440 °C

440-460°C

Fig.1

Fig. 2

Fig. 3